# EUROPEAN PATENT APPLICATION

(11) **EP 1 431 892 A1**
(43) Date of publication of application: **23.06.2004**
(21) Application number: 02768077.6
(22) Date of filing: 25.09.2002
(51) Int. Cl.: G06F 17/60

(54) **POINT RETURN METHOD AND APPARATUS**

(30) Priority: 28.09.2001 JP 2001303552
(71) Applicant: Sony Corporation, Tokyo 141-0001 (JP)
(72) Inventor: KAWASHIMA, Takashi Sony Finance International, Inc, Tokyo 107-0062 (JP); HAGIWARA, Kotaro Sony Finance International, Inc, Tokyo 107-0062 (JP); HAYAASHI, Hirofumi Sony Finance International, Inc, Tokyo 107-0062 (JP); GOISHI, Shinya c/o SONY FINANCE INTERNATIONAL, INC, Minato-ku, Tokyo 107-0062 (JP)
(74) Representative: Horner, David Richard
(86) International application number: PCT/JP2002/009897
(87) International publication number: WO 2003/030050

(57) **Abstract**

There is provided a point redeeming method in which a point redemption service in which any commercial entity including real stores and virtual stores can participate without restriction is achieved. When a customer (300) who can use electronic currency (350) for payment of a commercial transaction in electronic currency participating stores (400) and (450) according to a balance amount performs a commercial transaction in a point participating store, points are assigned based on a payment amount of the commercial transaction, and an amount of electronic currency according to the number of points is added to the balance amount.

## Description

### Technical Field

The present invention relates to a point redeeming method and apparatus for assigning points when commercial transactions are performed by a customer according to a payment amount of the commercial transactions, and for returning benefits to the customer according to the number of points.

### Background Art

In order to give a high purchase incentive to customers, commercial entities (such as stores and credit companies) which perform commercial transactions such as selling goods or providing services issue a point card and assign points according to a payment amount, which are accumulated in the point card, to provide point redemption services in which the accumulated points are exchanged for goods or coupons. In some point redemption services, the accumulated points are redeemed for a discount off the next purchase.

Prior to the advent of point redemption services, customers stuck stamps issued according to a payment amount on a stamp sheet and the stamps were exchanged for goods, coupons, or the like.

With the recent rapid improvement in the communication environment over networks such as the Internet, the number of cyber transactions, where virtual stores (cyber stores) are run on the Internet or various services are provided, has increased. In such cyber transactions, similar point redemption services, where points are assigned according to a payment amount and the points are redeemed for goods or a discount off the next purchase, are also performed.

Point redemption services are provided by each commercial entity or each group of commercial entities. Thus, the customers must carry point cards issued by commercial entities for use in the stores, and must manage the number of accumulated points for each commercial entity or each group of commercial entities, which is troublesome for the customers. In some cases, the number of point cards ranges from a few to dozens, and the correspondence between cards and stores may not be remembered so that, in fact, the customers often fail to use the point redemption services.

Since point redemption services are restricted to each commercial entity or each group of commercial entities, the customers may not collect many points and therefore cannot receive expensive goods. The point redemption services are therefore insufficient to give high purchase incentives. Each commercial entity or each group of commercial entities also has a problem in that its own system must be set up and administered, which places a heavy burden on the entity or entities. In particular, management of goods and so on for which points are to be exchanged places a heavy burden on commercial entities.

In view of the fact of the point redemption services being restricted to each commercial entity or each group of commercial entities, a cyberspace point redemption service system disclosed in, for example, Japanese Unexamined Patent Application Publication No. 10-78989 has been proposed. In this system, a point redemption service can be provided in a plurality of stores in a virtual shopping mall run in cyberspace, and some of the foregoing problems can be overcome by this system.

However, the service described in the above-noted publication is limited to cyberspace, and there is a restriction on the number of participating commercial entities. Thus, a problem is that the point redemption service is not available in a broader range of commercial entities, including not only virtual stores but also brick-and-mortar stores (stores which the customers visit for face-to-face commercial or service transactions) and commercial entities which provide mail order services (transactions in which goods are viewed in brochures or on TV and are delivered via courier etc.).

The present invention has been made in view of this background, and an object of the present invention is to realize a point redemption service which any commercial entity including brick-and-mortar stores and virtual stores can take part in without restriction.

Another object of the present invention is to make the collected points commonly available in a large number of commercial entities including cyber stores and brick-and-mortar stores while reducing limitations involved with use of the collected points.

### Disclosure of Invention

### [Point Redeeming Method]

According to a first aspect of the present invention, there is provided a point redeeming method in which, when a customer who can use electronic currency for payment of a commercial transaction in an electronic currency participating store according to a balance amount performs a commercial transaction in a point participating store, points are assigned based on a payment amount of the commercial transaction, and an amount of electronic currency corresponding to the number of points is added to the balance amount.

As used herein, the term "point" is a point assigned according to purchase of goods or use of services. Examples of the points assigned according to use of services include points assigned according to use (including real use and cyber use) of a credit card, and points assigned according to transport distances (mileages) of transportation (such as airplanes and trains), information disclosure such as a questionnaire response (including a real one and a cyber one), the number of times a customer visits a store, browsing of a page linked from a banner advertisement (a service provided by Cybergold, Inc.), an access to specific web sites (see Japanese Unexamined Patent Application Publication No. 2001-184426), and so on.

The electronic currency may include not only electronic cash distributed on networks, but also, as an electronic wallet, an electronic currency card in which the balance amount is electronically or magnetically recorded. The electronic currency participating store and the point participating store may include not only a virtual store which runs on a network, but also a real store which the customer visits for face-to-face commercial or service transactions, a credit business entity which provides a credit service for the customer, and so on. The commercial transaction in the point participating store may be settled not only using the electronic currency, but also by cash, using a credit card for use in later settlement of accumulated charges for a certain period, a debit card for use in immediate settlement from deposit, and so on.

In the present invention, points assigned to customers are redeemed for an amount of electronic currency, thus enabling commercial transactions of monetary amount corresponding to the redeemed amount to be carried out not only in point participating stores but also in any electronic currency participating store including virtual stores and brick-and-mortar stores, while reducing limitations involved with use of the points. Furthermore, not only virtual stores but also brick-and-mortar stores, etc., can be point participating stores, and a larger number of commercial entities can take part in the point system. In addition, points collected by a customer are commonly available in a larger number of commercial entities, thus giving higher incentives to commercial transaction by means of point collection. Since points are redeemed for an amount of electronic currency, such redemption reduces the burden due to management of goods and so on for which the points are exchanged, and is more convenient than redemption for coupons etc., so that commercial entities are not required for delivering the coupons etc. and customers can use the redeemed amount without carrying the coupons.

### [Point Redeeming Apparatus]

According to a second aspect of the present invention, there is provided a point redeeming apparatus including point storage means for storing points of a customer who can use electronic currency for payment of a commercial transaction in an electronic currency participating store according to a balance amount; amount assignment means for assigning an amount to the electronic currency; point balance processing means for, when the customer performs a commercial transaction in a point participating store, adding points to the points stored in the point storage means based on transaction information sent from the point participating store; amount conversion means for converting at least some of the points stored in the point storage means into the amount of electronic currency according to a point exchange request from the customer; and exchange instruction means for instructing the amount assignment means to add the amount converted by the amount conversion means to the balance amount.

The electronic currency may include not only electronic cash distributed on networks, but also, as an electronic wallet, an electronic currency card in which the balance amount is electronically or magnetically recorded. The electronic currency participating store and the point participating store may include not only a virtual store which runs on a network, but also a real store which the customer visits for face-to-face commercial or service transactions, a credit business entity which provides a credit service for the customer, and so on. The commercial transaction in the point participating store may be settled not only using the electronic currency, but also using cash, a credit card for use in later settlement of accumulated charges for a certain period, a debit card for use in immediate settlement from deposit, and so on.

The advantage of the point redeeming apparatus according to the second aspect of the present invention is similar to the advantage of the above-described point redeeming method, and a description thereof is thus omitted.

The point redeeming apparatus according to the second aspect of the present invention may further include redemption rate storage means for storing in advance a redemption rate for a plurality of point participating stores based on which a payment amount of the commercial transaction is exchanged for the points. The point balance processing means can multiply the payment amount of the commercial transaction contained in the transaction information sent from the point participating store by the redemption rate to determine the points to be newly added. In this case, the redemption rate storage means can store a special redemption rate for use when a special condition is satisfied and a normal redemption rate for use when the special condition is not satisfied, and the amount conversion means can modify the redemption rate for use depending upon whether or not the special condition is satisfied.

The point redeeming apparatus may further include exchange rate storage means for storing in advance an exchange rate for a plurality of point participating stores based on which the points are converted into the amount of electronic currency. The amount conversion means can multiply the points by the exchange rate to determine the amount of electronic currency. In this case, the exchange rate storage means can store a special exchange rate for use when a special condition is satisfied and a normal exchange rate for use when the special condition is not satisfied, and the amount conversion means can modify the exchange rate for use depending upon whether or not the special condition is satisfied.

In the point redeeming apparatus according to the second aspect of the present invention, after the points are added by the point balance processing means, an electronic mail including a message indicating that newly produced points become exchangeable can be delivered to a mail address of the customer.

The point storage means, the amount assignment means, the point balance processing means, the amount conversion means, and the redemption instruction means can be implemented by a server administered by a single commercial entity serving as a point redemption service business entity in which the point participating store participates and an electronic currency business entity in which the plurality of electronic currency participating stores participate.

Alternatively, the point storage means, the point balance processing means, the amount conversion means, and the redemption instruction means can be implemented by a point server administered by a point redemption service business entity in which the point participating store participates, and the amount assignment means can be implemented by a money server administered by an electronic currency business entity in which the plurality of electronic currency participating stores participate.

The point exchange request to the amount conversion means can be sent from a terminal device which can access the server over a network and which is used by the customer over the network.

### [Point Redemption Program and Information Recording Medium]

According to a third aspect of the present invention, there is provided a point redemption program for causing a computer to function as the point redeeming apparatus according to the second aspect of the present invention.

According to a fourth aspect of the present invention, there is provided a computer-readable information recording medium in which the point redemption program according to the third aspect of the present invention is recorded.

### Brief Description of the Drawings

Fig. 1 is a block diagram showing the overall structure of a system according to an embodiment of the present invention.
Fig. 2 is a diagram showing the structure of an electronic money card of the embodiment of the present invention.
Fig. 3 is a view showing the structure of card information recorded in the electronic money card of the embodiment of the present invention.
Fig. 4 is a block diagram showing the structure of a server of the embodiment of the present invention.
Fig. 5 is a view showing customer personal information of the embodiment of the present invention.
Fig. 6 is a view showing point record information of the embodiment of the present invention.
Fig. 7 is a view showing redemption rate information of the embodiment of the present invention.
Fig. 8 is a view showing exchange rate information of the embodiment of the present invention.
Figs. 9A through 9F are illustrations of examples of screen image of the information displayed on a customer terminal of the embodiment of the present invention, in which Fig. 9A shows a member's page, Fig. 9B shows an authentication page, Fig. 9C shows a pop-up display, Fig. 9D shows a point indication page, Fig. 9E shows an exchanged item selection page, and Fig. 9F shows a point exchange page.
Figs. 10A through 10D are illustrations of examples of screen image of the information displayed on the customer terminal of the embodiment of the present invention, in which Fig. 10A shows an acknowledgement page, Fig. 10B shows a cancellation page, Fig. 10C shows a card recharge page, and Fig. 10D shows a card recharge completion page.
Fig. 11 is an illustration of a point redeemable notification mail of the embodiment of the present invention.
Figs. 12A through 12C are flowcharts showing a point accumulation process of the embodiment of the present invention, in which Fig. 12A shows an example, Fig. 12B shows another example, and Fig. 12C shows still another example.
Fig. 13 is a chart showing a point exchange process of the embodiment of the present invention.

### Best Mode for Carrying Out the Invention

An embodiment of the present invention is described below with reference to the drawings.

### [Overall System]

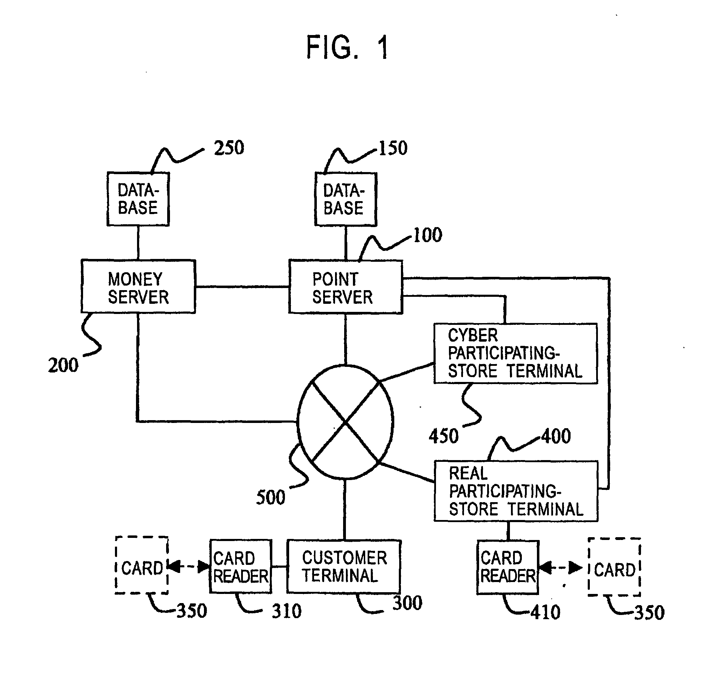

Fig. 1 is a block diagram showing the overall structure of a point redeeming system according to an embodiment of the present invention.

In Fig. 1, reference numeral 100 denotes a point server managed by a point redemption service business entity which provides a point redemption service infrastructure, and reference numeral 200 denotes a money server managed by an electronic money business entity which provides an electronic money (electronic currency) service infrastructure. The servers 100 and 200 include databases 150 and 250, respectively.' The databases 150 and 250 are database servers capable of performing communication via a storage device attached to the corresponding servers 100 and 200 or over a network such as a LAN (local area network).

In the following description taken in conjunction with the present embodiment, the point redemption service business entity and the electronic money business entity are run by different commercial entities, but may be run by the same commercial entity.

Reference numeral 300 denotes a terminal device (customer terminal) of a customer who uses the point redemption service and the electronic money service, and the customer terminal 300 is equipped with a card reader (a device for reading and writing the information digitally recorded in an electronic money card 350 described below) 310. The customer terminal 300 may be any of a terminal device installed in a room and a portable terminal device.

The electronic money service provided by the electronic money business entity is such that an electronic money card (in the present embodiment, an IC card) 350 is issued to a customer so that the customer can perform commercial transactions (including merchandise transactions and service transactions) in a plurality of electronic money participating stores using the electronic money card 350. Upon a recharging request from a customer which is involved with payment in consideration, the money server 200 assigns an amount corresponding to the monetary amount desired by the customer to the electronic money card 350 as a balance. The customer is able to do shopping, etc., without cash in any electronic money participating store as far as balance remains.

The receipts to and disbursements from the electronic money card 350 are performed by the card reader 310 attached to the customer terminal 300 or a card reader 410 attached to a participating-store terminal 400 installed in a store or the like. The electronic money card 350 is used for use of electronic money services, and, in this embodiment, it is a joint card also functioning as a credit card. The electronic money card 350 may also function as a debit card or any other member card.

The electronic money participating stores include real (brick-and-mortar) stores (including automatic vending machines equipped with a card reader, and so on) which customers actually visit for face-to-face commercial transactions, such as purchasing goods or receiving services, cyber (virtual) stores which perform similar commercial transactions over a network, commercial entities, except for the cyber stores, which provide mail order services (in which goods are introduced by means of brochures, leaflets, TV, and so on to place an order via telephone or facsimile, and are delivered via courier etc.), and credit business entities or debit business entities which provide commercial transaction settlement services in such stores and so on.

The point redemption service provided by the point redemption service business entity is a service in which points are assigned at a predetermined rate with respect to the monetary amount of commercial transaction performed by a customer in a point participating store so as to return benefits to the customer according to the number of collected points. In the present embodiment, the collected points are redeemed not only for goods or coupons but also for an amount of the electronic money card 350. The point participating stores include stores and business entities similar to the examples of the electronic money participating stores described above.

The point participating store and the electronic money participating store are not necessarily the same. In Fig. 1, reference numeral 400 denotes a terminal of a real participating store which participates in the above-described point redemption service and/or electronic money service, and reference numeral 450 denotes a terminal device of a cyber participating store which participates in the above-described point redemption service and/or electronic money service.

The payment in a point participating store may be performed not only using an electronic money card but also by cash, using a coupon, a credit card or a debit card, or any other settlement means.

The point server 100, the money server 200, the customer terminal 300, the real participating-store terminal 400, and the cyber participating-store terminal 450 can communicate with each other over a network 500 such as the Internet. The network 500 is adapted so that a device connected thereto via either wired or wireless communication can transmit and receive information to and from a target device once the device has established a session with the target device. Although the network 500 is simplified in Fig. 1, the structure of the network 500 is more complex in practice. For example, in the Internet, a plurality of networks are combined via gateways. The connection of the networks is not limited to a direct connection with a so-called backbone, and may include a temporary connection via a PPP connection and so on as far as devices which set up a session can transmit and receive information to and from each other.

In this embodiment, the point server 100, the money server 200, and the participating-store terminals 400 and 450 may communicate with each other over the network 500, and may individually communicate with each other via a dedicated line in order to transmit and receive important information.

The point server 100 and the money server 200 also function as WWW (World Wide Web) servers for providing homepages, mail servers, and CGI (Common Gateway Interface) servers. Each of the point server 100 and the money server 200 is not necessarily implemented by a single computer, and may be implemented by a plurality of computers. The point server 100 and the money server 200 may be implemented by a single computer when they are administered by the same commercial entity.

The point server 100 and the money server 200 are formed by, for example, a general-purpose computer. The general-purpose computer includes a CPU (Central Processing Unit) or an MPU (Micro Processor Unit), a storage device such as a RAM (Random Access Memory) or a ROM (Read Only Memory), or a hard disk, an input device such as a keyboard or a mouse, a display apparatus such as a CRT (Cathod Ray Tube) or a liquid crystal display device, and a communication interface such as a modem, a terminal adapter, or a router. The general-purpose computer further includes an external storage device such as a CD-ROM device, a DVD (registered trademark) device, a hard disk apparatus, a magneto-optical disk apparatus, a flexible disc apparatus, or a magnetic tape apparatus.

The above-listed external storage devices are devices for loading a program recorded in a portable information recording medium into a server. The point server 100 and the money server 200 have at least an OS (Operating System) and an HTTP server program stored in a storage device thereof in order to allow for communication over the network 500 or the like.

The customer terminal 300 and the participating-store terminals 400 and 450 include a CPU or an MPU, a storage device such as a RAM, a ROM, or a hard disk, an input device such as a keyboard or a mouse, a display apparatus such as a CRT or a liquid crystal display device, and a communication interface such as a modem, a terminal adapter, or a router. Preferably, they further include an external storage device similar to that discussed above. The storage device of each of the customer terminal 300, the participating-store terminals 400 and 450 has at least an operating system (OS) and an HTTP (HyperText Transfer Protocol) viewer program (such as a browser) stored therein in order to allow for communication over the network 500 or the like. The storage device of the customer terminal 300 and the terminal 400 of the real participating store which participates in the electronic money service also stores a driver and an application program for activating the card readers 310 and 410.

The card readers 310 and 410 are devices for reading and writing various information digitally recorded in the electronic money card 350 issued by an electronic money business entity. In this embodiment, the card readers 310 and 410, and the electronic money card 350 are of the contactless type (wireless communication type) that data communication between the electronic money card 350 and the card readers 310 and 410 is allowed once the electronic money card 350 is placed close to (held over) a data reading unit of the card readers 310 and 410. It is to be understood that they may be of the contact type rather than the contactless type.

### [Electronic Money Card]

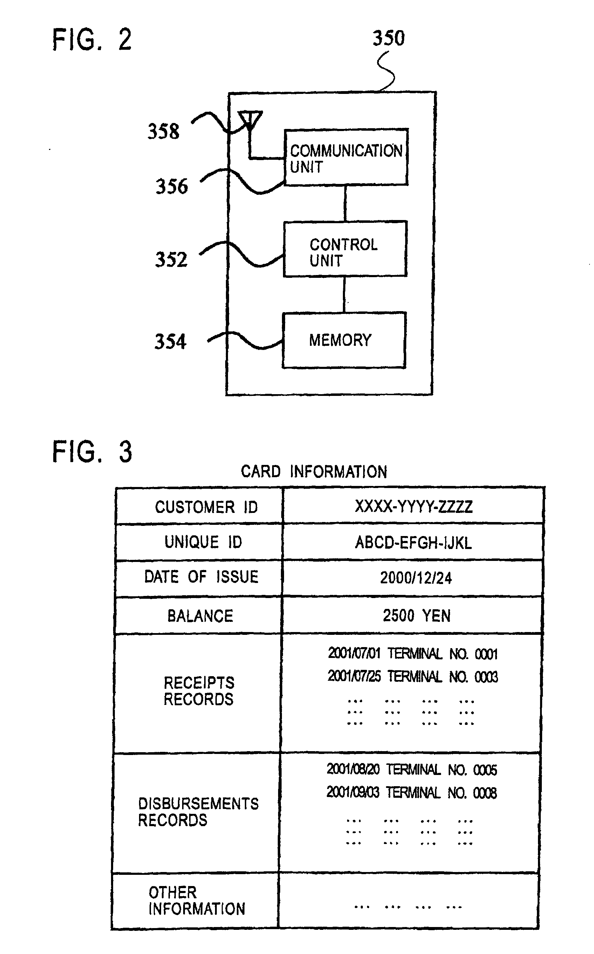

The electronic money card 350 is an IC card which functions as an electronic wallet for using electronic money, and is formed of a substantially-business-card-sized plastic card which accommodates an IC chip, a power supply, and so on. The name of this electronic money card, a credit card number, and so on are printed on the surface of the electronic money card 350 for visual confirmation. As shown in Fig. 2, the electronic money card 350 includes a control unit 352, a memory 354, a communication unit 356, and an antenna 358.

The control unit 352 controls reading and writing of data to and from the memory 354, controls the communication unit 356 to communicate data to and from the card readers 310 and 410, and controls other operations.

The memory 354 has card information stored therein, as depicted in Fig. 3.

The card information includes a customer ID (in the present embodiment, a 16-digit number) used for receiving the electronic money services, a unique ID, a date of issue (including a validity period), an electronic money balance, a receipts record, a disbursements record, and other information.

The term "unique ID" indicates information which can uniquely be converted into the customer ID or any other identification information for identifying the customer. During transmission and reception of information including the customer ID via the Internet or the like, the information might be leaked to the third party to abuse the customer ID. The unique ID is therefore identification information used for protecting important information such as the customer ID by sending information including the unique ID from the terminals 300 and 400, and converting the unique ID into the customer ID or any other ID for identifying the customer in the servers 100 and 200 which receives the information.

When the electronic money card 350 is placed close to (is passed over) the card readers 310 and 410, an information reading command or an information writing command is sent from the card readers 310 and 410, and the command is received via the communication unit 356. When the information reading command is sent, the card information is read from the memory 354 and is transmitted to the card readers 310 and 410. When the information writing command is sent, the writing information (such as a balance, a receipts record, and a disbursements record) sent from the card readers 310 and 410 is written to the memory 354.

### [Point Server]

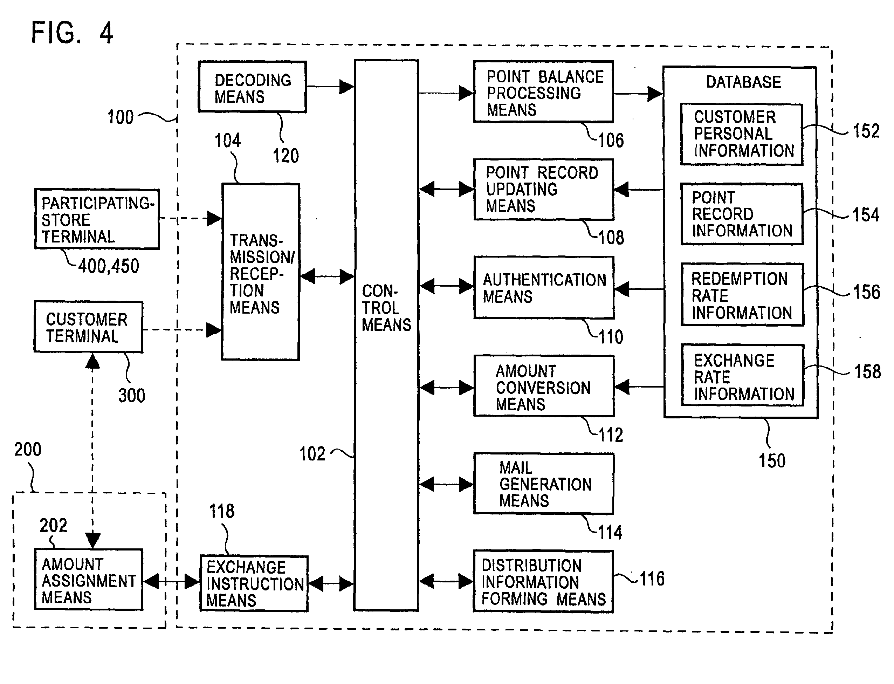

Fig. 4 is a block diagram showing the structure of a main part of the point server 100 managed and administered by the point redemption service business entity and the money server 200 managed and administered by the electronic money business entity.

As shown in Fig. 4, the point server 100 includes control means 102, transmission/reception means 104, point balance processing means 106, point record updating means 108, authentication means 110, amount conversion means 112, mail generation means 114, distribution information forming means 116, exchange instruction means 118, and decoding means 120.

The control means 102 controls the means 104 to 120, and controls communication with the customer terminal 300, the participating-store terminals 400 and 450, and the money server 200 over the network 500 or dedicated lines. The control means 102 further controls communication with the database 150 and controls other operations.

The transmission/reception means 104 receives an information providing request or any other request from the customer terminal 300, and transmits various information including page information (such as hypertext files and image files) to the customer terminal 300.

When a point addition request including the customer ID, the participating-store ID, and the monetary amount is sent from the control means 102, the point balance processing means 106 calculates additional points to be added to the points balance recorded in point record information 154 of the database 150, and records the number of points obtained by adding the additional points to the points balance in the database 150 as a new points balance.

The additional points are determined by extracting a redemption rate of redemption rate information 156 of the database 150 based on the participating-store ID and by multiplying the payment amount by the extracted redemption rate. In this embodiment, the redemption rate information 156 contains two types of redemption rates, i.e., a normal redemption rate and a special redemption rate. The point balance processing means 106 determines whether or not the current commercial transaction satisfies special conditions set in the redemption rate information 156, and calculates the additional points based on the special redemption rate when the special conditions are satisfied or, otherwise, based on the normal redemption rate. When the number of points is passed from the control means 102 in place of the payment amount, the point balance processing means 106 does not perform this calculation process and uses the number of points as the number of additional points.

When a point subtraction request including the customer ID and the number of points to be subtracted is sent from the control means 102, the point balance processing means 106 subtracts the subtraction points from the points balance recorded in the point record information 154 of the database 150, and records the number of points obtained by subtracting the subtraction points from the points balance in the database 150 as a new points balance.

When a record updating request is sent from the control means 102, the point record updating means 108 adds a predetermined record with respect to the newly produced additional or subtraction points to point addition record and point subtraction record of the point record information 154. When a predetermined period has elapsed or when the records exceed a predetermined number, the records are deleted in turn, starting from the oldest record.

The authentication means 110 determines, based on the customer ID or other information (for example, if a password is defined, the password), whether or not an accessing customer is entitled to receive the point redemption service provided by the point server 100, that is, whether or not the customer is a valid registrant. When the accessing customer is not a valid registrant, a message indicating that the service is refused is transmitted to the customer terminal 300 via the control means 102. The authentication means 110 further performs an authentication process upon an inquiry from the participating-store terminals 400 and 450 to determine whether or not the customer is a valid registrant and return the result to the participating-store terminals 400 and 450.

The amount conversion means 112 receives the participating-store ID and exchange points to be exchanged, which are passed from the control means 102, to calculate the amount (monetary amount) to be redeemed to the electronic money card 350, and outputs the redemption amount to the control means 102. The redemption amount is calculated by extracting an exchange rate of exchange rate information 158 of the database 150 based on the participating-store ID and by multiplying the exchange points by the extracted exchange rate. In this embodiment, the exchange rate information 158 contains two types of exchange rates, i.e., a normal exchange rate and a special exchange rate. The amount conversion means 112 determines whether or not the current point exchange satisfies special conditions set in the exchange rate information 158, and calculates the amount based on the special exchange rate when the special conditions are satisfied or, otherwise, based on the normal exchange rate.

The mail generation means 114 generates a point redemption notification mail and a point exchange reminder mail. The point redemption notification mail is an electronic mail containing a message indicating that the additional points newly added to the points balance become redeemable, and also containing a mail address extracted from customer personal information 152 of the database 150 as the destination. The point exchange reminder mail is an electronic mail containing a message indicating that an exchange expiry of the additional points newly added to the points balance which is set in the exchange rate information 158 of the database 150 reaches, and also containing a mail address extracted from the customer personal information 152 of the database 150 as the destination.

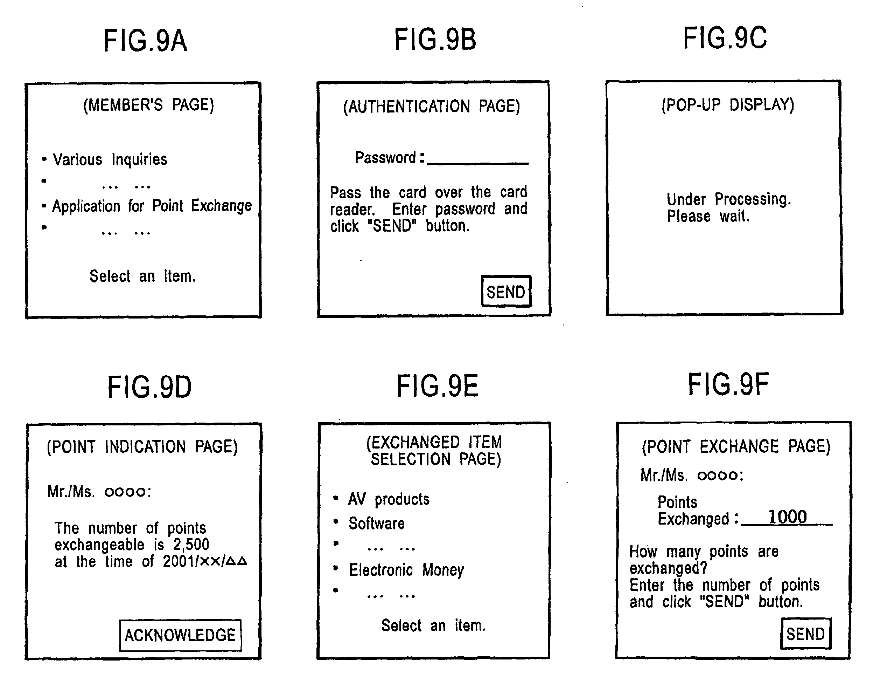

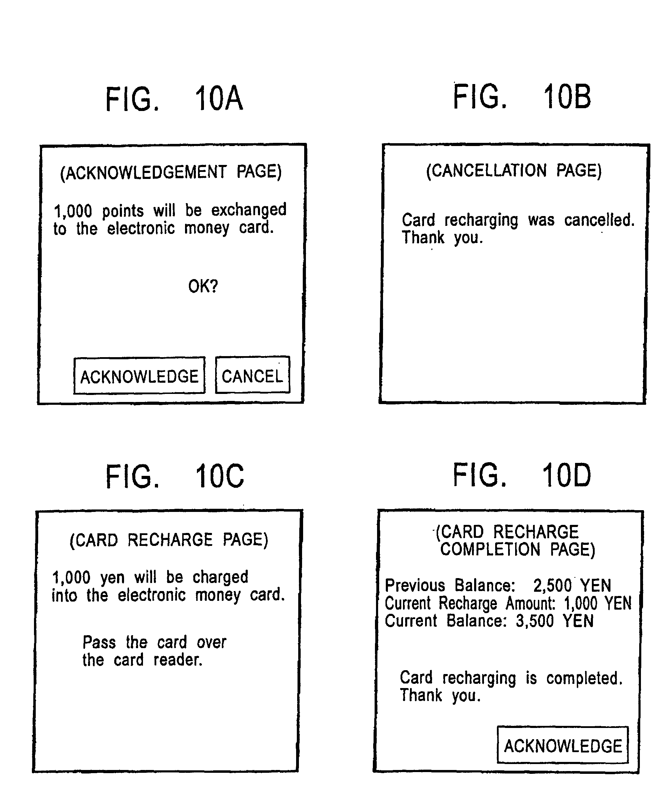

The distribution information forming means 116 generates a web page (formed of hypertext files, image files, and so on) containing information to be delivered to the customer terminal 300. The generated web page is sent to the customer terminal 300 via the control means 102 and the transmission/reception means 104, and images shown in, for example, Figs. 9A through 9F and Figs. 10A through 10D are displayed on a browser window of the display apparatus of the customer terminal 300.

The exchange instruction means 118 sends a redemption instruction including the amount determined by the amount conversion means 112 to the money server 200.

The decoding means 120 decodes various information which is sent from the customer terminal 300 and which has been encrypted for security before being sent. In the present embodiment, the information read from the electronic money card 350 when the customer passes it over the card reader 350 is encrypted using a predetermined encryption technique before being sent, and the decoding means 120 decodes the encrypted information.

### [Database]

As shown in Fig. 4, the database 150 contains the customer personal information 152, the point record information 154, the redemption rate information 156, and the exchange rate information 158.

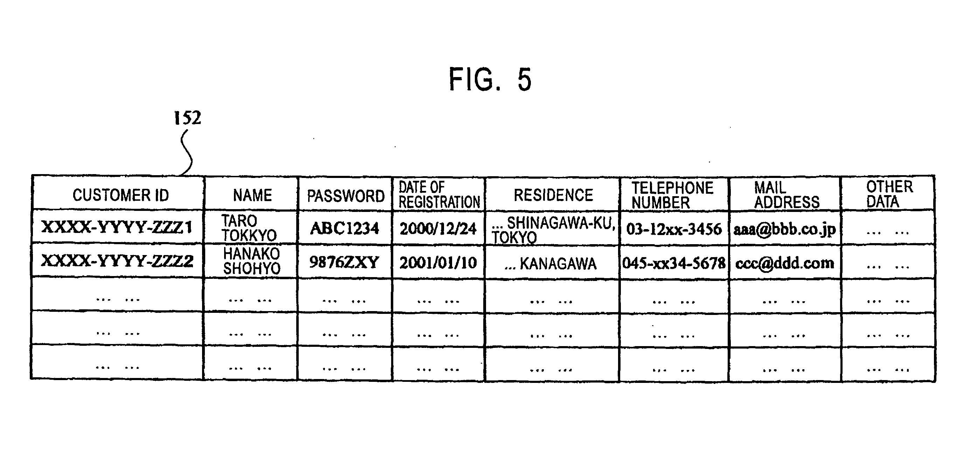

The customer personal information 152 is information defined for each customer registered in the point redemption service, and the details thereof are shown in Fig. 5. The customer personal information 152 includes a customer name, a password, the date of registration, a residence, a telephone number, a mail address, and other information in correspondence with the customer ID. The other information includes a credit card number of a credit card issued by a commercial entity which is the same as the point redemption service business entity, and a credit card number when this business entity is the same as the electronic money business entity and when the electronic money card is the joint card. These items are recorded in the customer personal information 152 when a customer becomes a valid registrant of the point redemption service. Each time a modification is made to each of the items, the customer personal information 152 is modified as required.

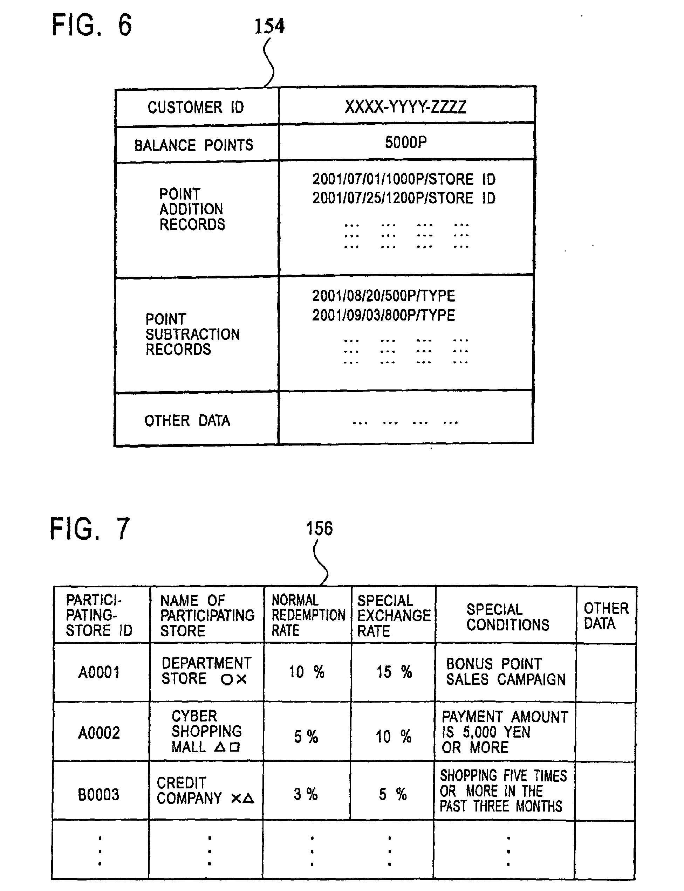

The point record information 154 is information indicating the points balance and point addition records or point subtraction records through exchange, etc., and the details thereof are shown in Fig. 6. The point record information 154 contains the points balance indicating the balance of exchangeable points, the point addition records and the point subtraction records, and other information in correspondence with the customer ID. When a new commercial transaction is carried out and points are added to the points balance, the date of assignment of those points, the number of assigned points, the participating-store ID of the participating store which assigned the points, and so on are recorded in turn in the point addition records. When a new point exchange occurs and points are subtracted from the points balance, the date of point exchange, the number of exchanged points, the type of goods for which the points were exchanged, and so on are recorded in turn in the point subtraction records. Preferably, when the records exceed a predetermined number or when a predetermined period has elapsed, in the point record information 154, the records are deleted in turn, starting from the oldest record.

The redemption rate information 156 is information in which a redemption rate of points to be assigned according to a payment amount of a commercial transaction performed in a point participating store by the customer is defined in advance for each point participating store. The details are shown in Fig. 7. The redemption rate information includes, in correspondence with the participating-store ID of each point participating store, the name of the participating store, the normal redemption rate, the special redemption rate, the special conditions, and other information.

For example, when a purchase amount at "Department Store ○×" is one thousand yen, then 100 points are assigned where the redemption rate is 10%. There are two types of redemption rates, i.e., a normal redemption rate and a special redemption rate, and special conditions are also set. These are set as desired by the participating store, and may be modified as required. The special redemption rate is a redemption rate for use in cases satisfying the special conditions, and the normal redemption rate is a redemption rate for use in cases where the special conditions are not satisfied.

In the special conditions, more points than usual may be assigned using the special redemption rate when a commercial transaction is carried out during a bonus point sales campaign performed by the participating store, or more points than usual may be assigned, using the special redemption rate, to a customer who purchases goods amounting to a predetermined monetary amount (for example, 5,000 yen) or more or who does shopping frequently (for example, five times or more in the past three months).

A plurality of special redemption rates and a plurality of special conditions may also be set so as to be more flexible toward the desires of participating stores.

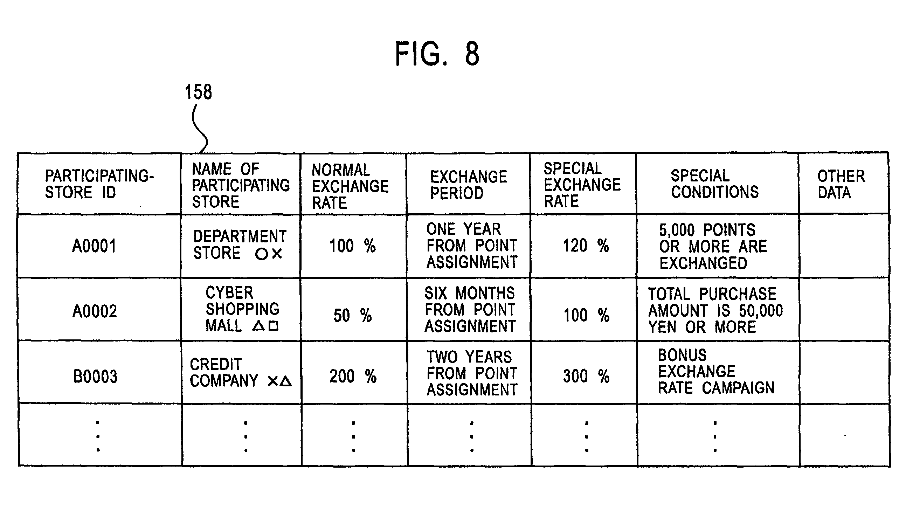

The exchange rate information 158 is information in which an exchange rate for use when some or all of the points (balance) collected by a customer himself are exchanged for an amount of electronic money is set in advance for each point participating store. The details are shown in Fig. 8, and the exchange rate information includes, in correspondence with the participating-store ID of each point participating store, the name of the participating store, the normal exchange rate, the exchange period, the special exchange rate, the special conditions, and other information.

For example, when the number of points assigned in return for goods purchased in "Department Store ○×" is 100, then 100 yen is redeemable where the exchange rate is 100%. There are two types of exchange rates, i.e., a normal exchange rate and a special exchange rate, and special conditions are also set. These are set as desired by the participating store, and may be modified as required. The special exchange rate is an exchange rate for use in cases satisfying the special conditions, and the normal exchange rate is an exchange rate for use in cases where the special conditions are not satisfied.

In the special conditions, a higher amount than usual is redeemable using the special exchange rate when a predetermined number of points (for example, 5,000 points) or more are stored, or a higher amount than usual is assigned using the special exchange rate when the purchase amount for the past several months (for example, three months) exceeds a predetermined monetary amount (for example, 50,000 yen) or during a bonus exchange rate campaign. A plurality of special exchange rates and a plurality of special conditions may also be set so as to be more flexible toward the desires of participating stores. The exchange period represents a validity period of the points, and the points cannot be exchanged when this period has expired.

### [Point Accumulation Process]

A point accumulation process performed by the point server 100 is described below with reference to the drawings.

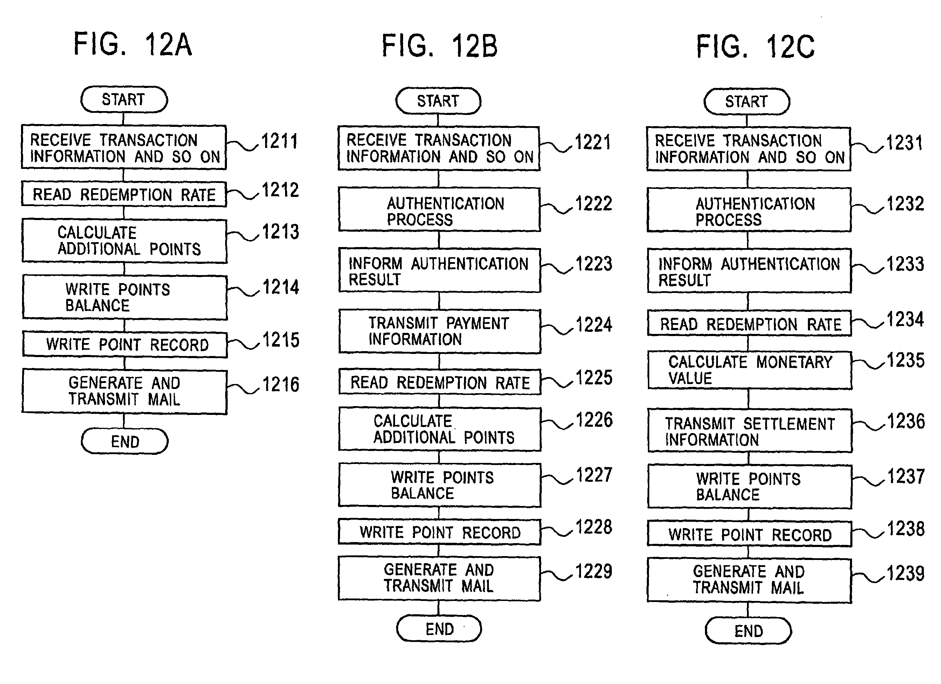

Fig. 12A is a flowchart when the customer performs commercial transactions, such as purchasing goods, in a point participating store (either a real participating store or a cyber participating store), and makes payment by cash, using a credit card (limited to a credit card issued by another commercial entity except for a case in which the electronic money card 350 is used as a credit card), a debit card, or an electronic money card (limited to an electronic money card issued by another commercial entity, except for the electronic money card 350) and when information including "payment amount" is sent as transaction information from a participating-store terminal.

First, the participating store transmits customer identification information (customer ID, credit card number, or debit card number) and transaction information including the payment amount and the participating-store ID of the participating store via the participating-store terminals 400 and 450 over dedicated lines. The point server 100 receives the customer identification information and the transaction information (step 1211). The information is passed to the control means 102 via the transmission/reception means 104.

Then, the control means 102 passes to the point balance processing means 106 a point addition request including, when a customer ID is sent as the customer identification information, the customer ID, or the corresponding customer ID extracted from the customer personal information 152 of the database 150 when a credit card number or the like is sent as the customer identification information, and the transaction information (the participating-store ID and the monetary amount).

In response, the point balance processing means 106 extracts a special condition of the redemption rate information 156 of the database 150 based on the participating-store ID. Then, the special conditions are checked; for example, when the participating-store ID of the participating store is "A0001", it is determined whether or not the current transaction is carried out during a "bonus point sales campaign". When this condition is satisfied, that is, when it is carried out during the "bonus point sales campaign", the special redemption rate "15%" is extracted and is used as a redemption rate based on which the points are redeemed. When this condition is not satisfied, that is, when it is not carried out during the "bonus point sales campaign", the normal redemption rate "10%" is extracted and is used as a redemption rate based on which the points are redeemed (step 1212).

After the redemption rate has been determined, the monetary amount of the transaction information is multiplied by the redemption rate to determine the additional points corresponding to the number of points issued this time (step 1213). Then, the point record information 154 of the database 150 is searched based on the customer ID to extract the points balance corresponding to the customer ID, and the number of points obtained by adding the additional points to the points balance is written to the database 150 as points balance (step 1214).

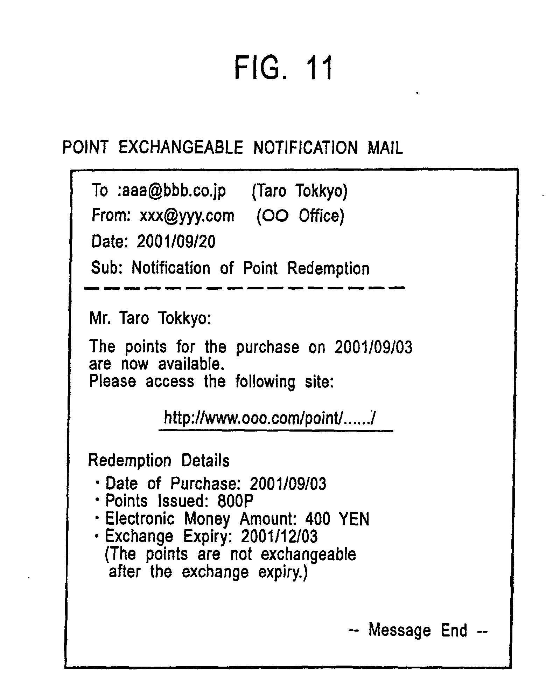

When updating the points balance is completed, then, the point record updating means 108 writes the date of transaction (or date of addition), the number of additional points, the participating-store ID of the transaction store, and so on to the point addition record corresponding to the customer ID of the point record information 154 of the database 150 (step 1215). Then, the control means 102 instructs the mail generation means 114 to generate a mail. In response, the mail generation means 114 generates a point exchangeable notification mail shown in Fig. 11. This electronic mail contains mail address "aaa@bbb.co.jp" of the customer, which is set as the destination, a message indicating that the points are now exchangeable and URL (Uniform Resource Locator) of a point exchange site, which are set as the body, and point-related information including "date of purchase", "points issued this time", "the monetary amount of electronic money for which the points are exchanged", "exchange expiry", and so on. The electronic mail is transmitted to the customer terminal 300 via the transmission/reception means 104 (step 1216).

Fig. 12B is a flowchart when the customer performs commercial transactions, such as purchasing goods, in a point participating store (either a real participating store or a cyber participating store), and uses the electronic money card 350 as a credit card or makes payment using the electronic money card 350 and when the transaction information sent from the participating-store terminal includes a "payment amount".

First, the participating store transmits customer identification information (customer ID or credit card number) and transaction information including the payment amount and the participating-store ID of the participating store via the participating-store terminals 400 and 450 over dedicated lines, and the point server 100 receives the customer identification information and the transaction information (step 1221). The information is passed to the control means 102 via the transmission/reception means 104.

Then, the control means 102 instructs the authentication means 110 to perform an authentication process. Specifically, the authentication means 110 searches the customer personal information 152 of the database 150 based on the customer ID or credit card number sent as the customer identification information, and verifies whether or not the customer is a valid registrant (step 1222). The authentication result of the authentication means 110 is sent to the participating-store terminals 400 and 450 via the control means 102 and the transmission/reception means 104 (step 1223).

If it is determined that the customer is a valid registrant, information necessary for credit settlement (the credit card number, the payment amount, the participating-store ID, and so on) is sent to credit processing means (not shown) when the received customer identification information includes a credit card number (that is, when the customer desires to use the credit card function of the electronic money card); and information necessary for electronic money settlement (the customer ID, the payment amount, the participating-store ID, and so on) is sent to electronic money processing means (not shown) of the money server 200 when the received customer identification information includes a customer ID (that is, when the customer desires to use the electronic money function of the electronic money card) (step 1224). Although a credit card number is used as the customer identification information in the foregoing description, the aforementioned unique ID may be used as the customer identification information (hereinafter, the same applies in the following description).

Then, the control means 102 passes to the point balance processing means 106 a point addition request including, when a customer ID is sent as the customer identification information, the customer ID, or the corresponding customer ID extracted from the customer personal information 152 of the database 150 when a credit card number is sent, and the transaction information (the participating-store ID and the monetary amount).

In response, the point balance processing means 106 extracts a special condition of the redemption rate information 156 of the database 150 based on the participating-store ID. Then, the special conditions are checked. When the conditions are satisfied, the special redemption rate is extracted and is used as a redemption rate based on which the points are redeemed. When the conditions are not satisfied, the normal redemption rate is extracted and is used as a redemption rate based on which the points are redeemed (step 1225).

After the redemption rate has been determined, the monetary amount of the transaction information is multiplied by the redemption rate to determine the additional points corresponding to the number of points issued this time (step 1226). Then, the point record information 154 of the database 150 is searched based on the customer ID, and the points balance corresponding to the customer ID is extracted. The number of points obtained by adding the additional points to the extracted points balance is written to the database 150 as points balance (step 1227).

When updating the points balance is completed, then, the point record updating means 108 writes required data to the point addition record corresponding to the customer ID of the point record information 154 of the database 150 (step 1228). Then, the control means 102 instructs the mail generation means 114 to generate a point exchangeable notification mail, and the electronic mail generated by the mail generation means 114 is transmitted to the customer terminal 300 via the transmission/reception means 104 (step 1229).

Fig. 12C is a flowchart when the customer performs commercial transactions, such as purchasing goods, in a point participating store (either a real participating store or a cyber participating store), and uses the electronic money card 350 as a credit card or makes payment using the electronic money card 350 and when the transaction information sent from the participating-store terminal includes "assigned points".

First, the participating store transmits customer identification information (customer ID or credit card number) and transaction information including assigned points and the participating-store ID of the participating store via the participating-store terminals 400 and 450 over dedicated lines, and the point server 100 receives the customer identification information and the transaction information (step 1231). The information is passed to the control means 102 via the transmission/reception means 104.

Then, the control means 102 instructs the authentication means 110 to perform an authentication process (step 1232). Specifically, the authentication means 110 searches the customer personal information 152 of the database 150 based on the customer ID or credit card number sent as the customer identification information, and verifies whether or not the customer is a valid registrant. The authentication result of the authentication means 110 is sent to the participating-store terminals 400 and 450 via the control means 102 and the transmission/reception means 104 (step 1233).

Then, the redemption rate information 156 of the database 150 is extracted (step 1234), and the assigned points are multiplied by the reciprocal of the extracted redemption rate to determine the payment amount (step 1235).

Then, if it is determined that the customer is a valid registrant, information necessary for credit settlement (the credit card number, the payment amount determined in step 1235, the participating-store ID, and so on) is sent to credit processing means (not shown) when the received customer identification information includes a credit card number (that is, when the customer desires to use the credit card function of the electronic money card); and information necessary for electronic money settlement (the customer ID, the payment amount determined in step 1235, participating-store ID, and so on) is sent to electronic money processing means (not shown) of the money server 200 when the received customer identification information includes a customer ID (that is, the customer desires to use the electronic money function of the electronic money card) (step 1236).

Then, the control means 102 passes to the point balance processing means 106 a point addition request including, when a customer ID is sent as the customer identification information, the customer ID, or the corresponding customer ID extracted from the customer personal information 152 of the database 150 when a credit card number is sent, and the transaction information (the participating-store ID and the assigned points).

In response, the points balance corresponding to the customer ID is extracted, and the number of points obtained by adding the assigned points to the extracted points balance is written to the database 150 as points balance (step 1237).

When updating the points balance is completed, then, the point record updating means 108 writes required data to the point addition record corresponding to the customer ID of the point record information 154 of the database 150 (step 1238). Then, the control means 102 instructs the mail generation means 114 to generate an exchangeable notification mail, and the electronic mail generated by the mail generation means 114 is transmitted to the customer terminal 300 via the transmission/reception means 104 (step 1239).

In a flowchart in a case in which the customer performs commercial transactions, such as purchasing goods, in a point participating store (either a real participating store or a cyber participating store), and makes payment by cash, using a credit card (limited to a credit card issued by another commercial entity, except for a case in which the electronic money card 350 is used as a credit card), a debit card, or an electronic money card (limited to an electronic money card issued by another commercial entity, except for the electronic money card 350) and when the transaction information sent from the participating-store terminal includes "assigned points", steps 1232 through 1236 in Fig. 12(C) are omitted, although this flowchart is not shown.

### [Point Exchange Process]

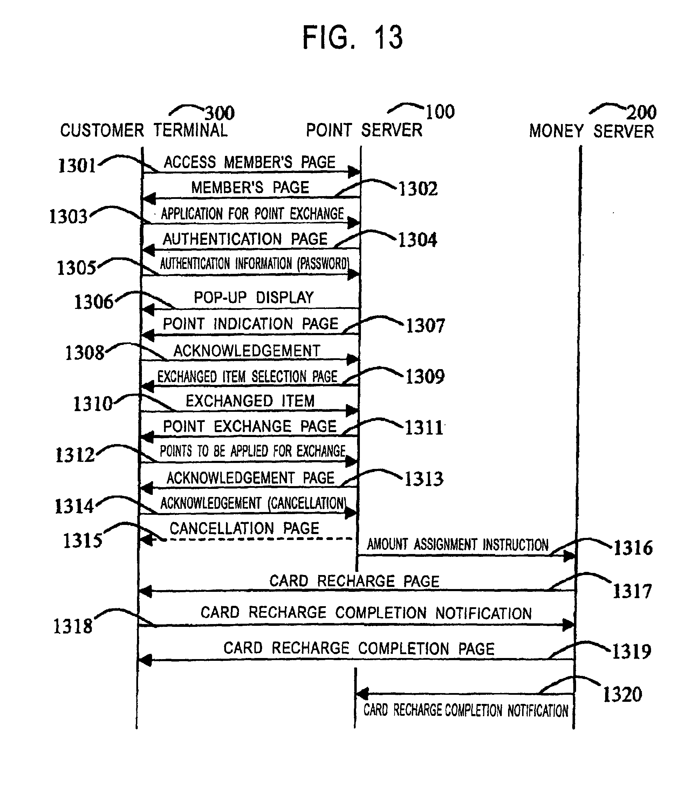

Fig. 13 is a chart of communication among the customer terminal, the point server, and the money server for illustration of a point exchange process.

When the customer launches a browser in the customer terminal 300, and enters and accesses the URL of the point exchange site set in the point redemption notification mail, a request to download a member's page is sent from the customer terminal 300 (step 1301). The point server 100 sends the request to the control means 102 via the transmission/reception means 104, and the control means 102 transmits files (such as hypertext files and image files) which form the member's page by the distribution information forming means 116 to the customer terminal 300 via the transmission/reception means 104 (step 1302).

Thus, the display shown in Fig. 9A in the form of screen image is presented on the browser window of the display apparatus of the customer terminal 300. The member's page contains "various inquires" for performing various inquires, "application for point exchange" for applying a point exchange, and so on.

The member's page may contain, in addition to the display shown in Fig. 9A, a link to a site administered by the money server 200 or the participating store, a banner advertisement, and other information. The same applies to the other pages described below.

Each of the items presented in the member's page is linked to a CGI program in this server. Once the customer clicks a desired one of the presented items using a mouse attached to the customer terminal 300 or the like (in this example, the customer selects the "application for point exchange"), this information is sent to the point server 100 (step 1303).

Then, the point server 100 transmits files (such as hypertext files and image files) which form an authentication page to the customer terminal 300 (step 1304). Thus, the display shown in Fig. 9B in the form of screen image is presented on the browser window of the display apparatus of the customer terminal 300, including a password input field, a predetermined message indicating the operation to be performed by the customer, a "SEND" button, and so on. When the customer passes the electronic money card 350 over the card reader 310, enters a password, and clicks the "SEND" button according to the message, the authentication information including the password and the customer ID (or unique ID) recorded as card information in the electronic money card 350 is sent to the point server 100 (step 1305).

When the point server 100 which receives the information sends files (such as hypertext files and image files) which form a pop-up display shown in Fig. 9C to the customer terminal 300 (step 1306), the pop-up display is presented on the customer terminal 300. At about this time, in the point server 100, the authentication means 110 starts an authentication process. Specifically, the authentication means 110 receives the customer personal information 152 corresponding to the customer ID from the database 150, and verifies whether or not the customer is a valid registrant who is entitled to receive the point redemption service.

It is assumed herein that the customer is a valid registrant, and the point server 100 sends files (such as hypertext files and image files) which form a point indication page to the customer terminal 300 (step 1307).

As shown in Fig. 9D in the form of screen image, the customer name and the current exchangeable points (points balance) are displayed on the browser window of the display apparatus of the customer terminal 300.

When the customer clicks the "ACKNOWLEDGE" button after acknowledgement, information indicating acknowledgement completion is sent to the point server 100 (step 1308), and the point server 100 transmits files (such as hypertext file and image files) which form an exchanged item selection page to the customer terminal 300 (step 1309).

As shown in Fig. 9E in the form of screen image, exchangeable items such as "AV products", "software", and "electronic money" are displayed on the browser window of the display apparatus of the customer terminal 300. Each of the items displayed in the exchanged item selection page is linked to a CGI program in this server. Once the customer clicks a desired one of the displayed items using a mouse attached to the customer terminal 300 or the like (in this example, the customer selects the "electronic money"), this information is sent to the point server 100 (step 1310).

Then, the point server 100 transmits files (such as hypertext files and image files) which form a point exchange page to the customer terminal 300 (step 1311). An input field for the number of points which the customer desires to exchange, a message indicating the operation to be performed by the customer, and a "SEND" button are displayed on the browser window of the display apparatus of the customer terminal 300, as shown in Fig. 9F in the form of screen image.

When the customer enters any number of points up to the number of exchangeable points presented in the point indication page and then clicks the "SEND" button, the number of points which the customer desires to exchange is transmitted to the point server (step 1312). The point server 100 checks that the number of points which the customer desires to exchange is not greater than the number of exchangeable points, and then transmits files (such as hypertext files and image files) which form an acknowledgement page to the customer terminal 300 (step 1313). If the number of points which the customer desires to exchange is over the number of exchangeable points, the point exchange page along with a message indicating this information is again transmitted.

When the customer terminal 300 receives the files which form the acknowledgement page, the number of points which the customer desires to exchange, an "ACKNOWLEDGE" button, a "CANCEL" button, and so on are displayed on the browser window of the display apparatus, as shown in Fig. 10A in the form of screen image.

When the customer clicks the "CANCEL" button, this information is sent to the point server 100 (step 1314), and the point redemption process terminates, so that files (such as hypertext files and image files) which form a cancellation page are transmitted (step 1315). When the customer terminal 300 receives the files which form the cancellation page, a message indicating termination of the process is displayed on the browser window of the display apparatus, as shown in Fig. 10B in the form of screen image.

When the customer clicks the "ACKNOWLEDGE" button in the acknowledgement page shown in Fig. 10A, this information is sent to the point server 100 (step 1314), and the amount conversion means 112 is activated in the point server 100.

The amount conversion means 112 receives the participating-store ID passed from the control means 102 and the exchanged points corresponding to the number of points to be exchanged to calculate the amount (monetary amount) to be redeemed to the electronic money card 350, and outputs the result to the control means 102. The amount is obtained by extracting an exchange rate of the exchange rate information 158 of the database 150 based on the participating-store ID and by multiplying the exchanged points by the extracted exchange rate. In this embodiment, the exchange rate information 158 contains two types of exchange rates, i.e., a normal exchange rate and a special exchange rate. The amount conversion means 112 determines whether or not the current point exchange satisfies the special conditions set in the exchange rate information 158, and the amount is determined based on the special exchange rate when the special conditions are satisfied or, otherwise, based on the normal exchange rate. The amount determined by the amount conversion means 112 is passed to the exchange instruction means 118, and is then sent to the money server 200 via the exchange instruction means 118 (step 1316).

In the money server 200, upon receipt of the amount, amount assignment means 202 transmits files (such as hypertext files and image files) which form a card recharge page to the customer terminal 300 (step 1317).

A message shown in Fig. 10C in the form of screen image is displayed on the browser window of the display apparatus of the customer terminal 300. When the customer passes the electronic money card 350 over the card reader 310 according to the message, the amount assignment means 202 adds the amount (monetary amount) determined by the amount conversion means 112 to the balance of the electronic money card 350.

When the new amount is successfully written, the amount assignment means 202 transmits files (such as hypertext files and image files) which form a card recharge completion page to the customer terminal 300 (step 1319). As shown in Fig. 10D in the form of screen image, a "previous balance", a "current recharge amount", a "current balance", an "ACKNOWLEDGE" button, and so on are displayed on the browser window of the display apparatus of the customer terminal 300.

The amount assignment means 202 further sends a card recharge completion notification indicating that the new amount produced by the point exchange has been charged into the electronic money card 350 of the customer to the point server 100 (step 1320).

In the point server 100, the point balance processing means 106 subtracts the number of points exchanged in the current process from the points balance of the point record information 154, and records the details in the point subtraction record. Then, the series of point exchange steps ends.

The "customer terminal" which accepts card recharge may be any terminal which can perform recharging with electronic money, and examples of terminals may include not only a computer equipped with the above-described card reader 310 but also a store terminal which can perform recharging, an electronic money specific CD (Cash Dispenser), and an ATM (Automatic Teller Machine).

In a case in which customer terminals are not user's computers but include store terminals, electronic money specific CDs, and ATMs, information (in the present embodiment, the "customer ID (electronic money card ID)" shown in Fig. 3) for identifying a user who performs a refunds process may be delivered in advance to all or some of the customer terminals.

When a user uses an electronic money card for other applications such as purchasing goods or services in a store and recharging it with electronic money, the above-described point redemption scheme is initiated, thus allowing the point redemption process to immediately terminate. In this case, it is to be understood that the above-described point redemption scheme may also be initiated if the user visits the site from his/her customer terminal to select the point redemption process.

In the foregoing description, information on the accumulated points is regularly or irregularly sent to the users via electronic mail (active information service); however, the information on the accumulated points may be provided on a web site over a network, waiting for a user to access it (passive information service).

The foregoing embodiment is merely for easy understanding of the present invention, and is not intended to restrict the present invention. Accordingly, the elements disclosed in the illustrated embodiment should encompass all modifications in design or equivalences which fall within the technical scope of the present invention.

According to the present invention, an advantage that point redemption services in which any commercial entity including real stores and virtual stores can participate without restriction can be accomplished is achieved.

Another advantage is that the collected points are commonly available in a large number of commercial entities including not only virtual stores but also real stores, while reducing limitations involved with use of the collected points.

Another advantage is that the burden due to management of goods is reduced compared to cases in which points are exchanged for goods or the like, while increasing the mount of distribution of electronic money.

### Industrial Applicability

The present invention relates to a point redeeming method and apparatus for assigning points when commercial transactions are performed by a customer according to a payment amount of the commercial transactions, and for returning benefits to the customer according to the number of points.

## Claims

1. A point redeeming method in which, when a customer who can use electronic currency for payment of a commercial transaction in an electronic currency participating store according to a balance amount performs a commercial transaction in a point participating store, points are assigned based on a payment amount of the commercial transaction, and
an amount of electronic currency corresponding to the number of points is added to the balance amount.

2. A point redeeming method according to claim 1, wherein the electronic currency comprises, as an electronic wallet, an electronic currency card in which the balance amount is electronically or magnetically recorded.

3. A point redeeming method according to claim 1, wherein the electronic currency participating store and the point participating store include at least one of a real store which the customer visits for face-to-face commercial or service transactions, a virtual store which runs on a network, and a credit business entity which provides a credit service for the customer.

4. A point redeeming method according to claim 1, wherein the commercial transaction in the point participating store is settled using one of the electronic currency, cash, a credit card, and a debit card.

5. A point redeeming apparatus comprising point storage means for storing points of a customer who can use electronic currency for payment of a commercial transaction in an electronic currency participating store according to a balance amount; amount assignment means for assigning an amount to the electronic currency; point balance processing means for, when the customer performs a commercial transaction in a point participating store, adding points to the points stored in said point storage means based on transaction information sent from the point participating store; amount conversion means for converting at least some of the points stored in said point storage means into the amount of electronic currency according to a point exchange request from the customer; and exchange instruction means for instructing said amount assignment means to add the amount converted by said amount conversion means to the balance amount.

6. A point redeeming apparatus according to claim 5, wherein the electronic currency comprises, as an electronic wallet, an electronic currency card in which the balance amount is electronically or magnetically recorded.

7. A point redeeming apparatus according to claim 5, further comprising redemption rate storage means for storing in advance a redemption rate for a plurality of point participating stores based on which a payment amount of the commercial transaction is exchanged for the points, wherein said point balance processing means multiplies the payment amount of the commercial transaction contained in the transaction information sent from the point participating store by the redemption rate to determine the points to be newly added.

8. A point redeeming apparatus according to claim 7, wherein said redemption rate storage means stores a special redemption rate for use when a special condition is satisfied and a normal redemption rate for use when the special condition is not satisfied, and said amount conversion means modifies the redemption rate for use depending upon whether or not the special condition is satisfied.

9. A point redeeming apparatus according to claim 5, further comprising exchange rate storage means for storing in advance an exchange rate for a plurality of point participating stores based on which the points are converted into the amount of electronic currency, wherein said amount conversion means multiplies the points by the exchange rate to determine the amount of electronic currency.

10. A point redeeming apparatus according to claim 9, wherein said exchange rate storage means stores a special exchange rate for use when a special condition is satisfied and a normal exchange rate for use when the special condition is not satisfied, and said amount conversion means modifies the exchange rate for use depending upon whether or not the special condition is satisfied.

11. A point redeeming apparatus according to claim 5, wherein, after the points are added by said point balance processing means, an electronic mail including a message indicating that newly produced points become exchangeable is delivered to a mail address of the customer.

12. A point redeeming apparatus according to claim 5, wherein said point storage means, said amount assignment means, said point balance processing means, said amount conversion means, and said redemption instruction means are implemented by a server administered by a single commercial entity serving as a point redemption service business entity in which the point participating store participates and an electronic currency business entity in which the plurality of electronic currency participating stores participate.

13. A point redeeming apparatus according to claim 5, wherein said point storage means, said point balance processing means, said amount conversion means, and said redemption instruction means are implemented by a point server administered by a point redemption service business entity in which the point participating store participates, and said amount assignment means is implemented by a money server administered by an electronic currency business entity in which the plurality of electronic currency participating stores participate.

14. A point redeeming apparatus according to claim 5, wherein the point exchange request to said amount conversion means is sent from a terminal device which can access the server over a network and which is used by the customer over the network.

15. A point redemption program for causing a computer to function as the point redeeming apparatus according to claim 5.

16. A computer-readable information recording medium in which the point redemption program according to claim 15 is recorded.

## Amended claims

### Amended claims under Art. 19.1 PCT

**1.** A point redeeming method in which, when a customer who can use electronic currency for payment of a commercial transaction in an electronic currency participating store according to a balance amount performs a commercial transaction in a point participating store, points are assigned based on a payment amount of the commercial transaction, and
an amount of electronic currency corresponding to the number of points is added to the balance amount.

**2.** A point redeeming method according to claim 1, wherein the electronic currency comprises, as an electronic wallet, an electronic currency card in which the balance amount is electronically or magnetically recorded.

**3.** A point redeeming method according to claim 1, wherein the electronic currency participating store and the point participating store include at least one of a real store which the customer visits for face-to-face commercial or service transactions, a virtual store which runs on a network, and a credit business entity which provides a credit service for the customer.

**4.** A point redeeming method according to claim 1, wherein the commercial transaction in the point participating store is settled using one of the electronic currency, cash, a credit card, and a debit card.

**5.** (Amended) A point redeeming apparatus comprising point storage means for storing points of a customer who can use electronic currency for payment of a commercial transaction in an electronic currency participating store according to a balance amount; amount assignment means for assigning an amount to the electronic currency; point balance processing means for, when the customer performs a commercial transaction in a point participating store, adding points to the points stored in said point storage means based on transaction information sent from the point participating store; amount conversion means for converting at least some of the points stored in said point storage means into the amount of electronic currency according to a point exchange request from the customer; and exchange instruction means for instructing said amount assignment means to add the amount converted by said amount conversion means to the balance amount, wherein the electronic currency comprises, as an electronic wallet, an electronic currency apparatus in which the balance amount is electronically or magnetically recorded.

**6.** A point redeeming apparatus according to claim 5, wherein the electronic currency comprises, as an electronic wallet, an electronic currency card in which the balance amount is electronically or magnetically recorded.

**7.** A point redeeming apparatus according to claim 5, further comprising redemption rate storage means for storing in advance a redemption rate for a plurality of point participating stores based on which a payment amount of the commercial transaction is exchanged for the points, wherein said point balance processing means multiplies the payment amount of the commercial transaction contained in the transaction information sent from the point participating store by the redemption rate to determine the points to be newly added.

**8.** A point redeeming apparatus according to claim 7, wherein said redemption rate storage means stores a special redemption rate for use when a special condition is satisfied and a normal redemption rate for use when the special condition is not satisfied, and said amount conversion means modifies the redemption rate for use depending upon whether or not the special condition is satisfied.

**9.** A point redeeming apparatus according to claim 5, further comprising exchange rate storage means for storing in advance an exchange rate for a plurality of point participating stores based on which the points are converted into the amount of electronic currency, wherein said amount conversion means multiplies the points by the exchange rate to determine the amount of electronic currency.

**10.** A point redeeming apparatus according to claim 9, wherein said exchange rate storage means stores a special exchange rate for use when a special condition is satisfied and a normal exchange rate for use when the special condition is not satisfied, and said amount conversion means modifies the exchange rate for use depending upon whether or not the special condition is satisfied.

**11.** A point redeeming apparatus according to claim 5, wherein, after the points are added by said point balance processing means, an electronic mail including a message indicating that newly produced points become exchangeable is delivered to a mail address of the customer.

**12.** A point redeeming apparatus according to claim 5, wherein said point storage means, said amount assignment means, said point balance processing means, said amount conversion means, and said redemption instruction means are implemented by a server administered by a single commercial entity serving as a point redemption service business entity in which the point participating store participates and an electronic currency business entity in which the plurality of electronic currency participating stores participate.

**13.** A point redeeming apparatus according to claim 5, wherein said point storage means, said point balance processing means, said amount conversion means, and said redemption instruction means are implemented by a point server administered by a point redemption service business entity in which the point participating store participates, and said amount assignment means is implemented by a money server administered by an electronic currency business entity in which the plurality of electronic currency participating stores participate.

**14.** A point redeeming apparatus according to claim 5, wherein the point exchange request to said amount conversion means is sent from a terminal device which can access the server over a network and which is used by the customer over the network.

**15.** A point redemption program for causing a computer to function as the point redeeming apparatus according to claim 5.

**16.** A computer-readable information recording medium in which the point redemption program according to claim 15 is recorded.
